# EUROPEAN PATENT SPECIFICATION

(11) **EP 2 784 888 B1**
(45) Date of publication and mention of the grant of the patent: **31.10.2018**
(21) Application number: 13161115.4
(22) Date of filing: 26.03.2013
(51) Int. Cl.: H02G 3/14, E05C 9/04

(54) **Electrical installation box**
Elektroinstallationskasten
Boîte d'installation électrique

(43) Date of publication of application: 01.10.2014
(73) Proprietor: ABB Schweiz AG, 5400 Baden (CH)
(72) Inventor: Pezzato, Maurizio, 36065 Mussolente (VI) (IT); Gramola, Simone, 36060 Molvena (VI) (IT)
(74) Representative: Giavarini, Francesco

(56) References cited:
- EP-A1- 0 634 549
- DE-A1- 10 351 980
- US-A- 5 823 583
- US-A1- 2009 159 308
- US-A1- 2009 255 703
- US-A1- 2009 301 146
- US-A1- 2010 072 198
- US-A1- 2010 206 603
- US-A1- 2011 049 152
- US-A1- 2012 111 597
- US-B1- 6 265 662

## Description

The present patent disclosure relates to an installation box for electrical distribution applications, in particular of the type commonly indicated as consumer units.

As known, consumer units and more in general electrical installation boxes consist essentially of a box or container adapted to house inside it a certain number of electrical devices and components, which are usually mounted on mechanical supports, e.g. din-rail guides.

From a structural point of view, such boxes must be designed in order to guarantee a certain degree of protection for the devices housed, e.g. IP 40, IP 55, et cetera, as defined by national and international standards and rules.

To this end, known consumer units or installation boxes of the type according to the present disclosure have a suitably shaped housing which is formed by only one piece or by two parts securely connected to each other and made of electrical insulating plastics, and an opening/closing door which is connected therewith.

Although known installation boxes perform properly all functions required there are still some aspects which can be further improved, in particular as regard to the way the door is connected to the housing and/or the solutions adopted for the opening/closing mechanism.

Indeed, in some known solutions, mechanisms used for locking/unlocking a door have to be designed in a completely different manner when applied to installation boxes of the same type but of different sizes; in some other cases the operative connection of the door with the related housing is realized by means of additional pieces which are first connected to the housing, e.g. by screwing, and then used as connecting and/or anchoring parts for the door; in some further cases, locking/unlocking mechanisms are not particularly user-friendly when installed, e.g. they require the use of both hands to an operator.

Patent document US 2009/0255703 discloses an electrical box assembly comprising a lid provided with a couple of radially extending hinge members, and a base having a further hinge member. The lid is pivotally connected to the base by mutually aligning all hinge members and inserting inside them an additional hinge pin.

Patent document US 6,265,662 discloses a floor box assembly comprising a floor plate which is configured to fit over the floor box in an installed position. The floor plate defines an opening for providing access to an internal receptacle. A detent structure is operative between the door and the floor plate to retain the door releaseably in the closed position.

The present disclosure is aimed at facing and solving at least partially some of the above mentioned issues and provides an installation box for electrical distribution applications, comprising a housing suitable to accommodate one or more electrical devices, a door connected to said housing, and a mechanism for opening/closing said door, said mechanism comprising:
- a handle which is mounted on said door rotating about a rotation axis relative to the door itself; and
- a first locking/unlocking device for locking/unlocking said door to/from said housing; characterized in that said first locking/unlocking device is operatively connected to said handle and is actuated by a rotation of the handle itself so as it disengages from an associated first anchoring portion of said housing and allows opening of said door, wherein said at least a first locking/unlocking device is configured to translate along a direction substantially parallel with said rotation axis when actuated by the rotation of said handle and comprises a first shaped body suitable to operatively interact with said handle and first elastic means configured to contrast the movement of said first shaped body when the first locking device/unlocking device is actuated by the rotation of said handle so as to disengage from said first anchoring portion of the housing.

The installation box is further characterized in that said mechanism comprises a second locking/unlocking device which is also mounted on said door and operatively connected to and actuated by a rotation of said handle so as it disengages from an associated second anchoring portion of said housing and allows opening of said door, wherein said second locking/unlocking device is configured to translate along a direction substantially parallel with said rotation axis when actuated by the rotation of said handle and comprises a second shaped body suitable to operatively interact with said handle and second elastic means configured to contrast the movement of said second shaped body when the second locking/unlocking device is actuated by the rotation of said handle so as to disengage from the associated second anchoring portion of the housing, said first and second locking/unlocking devices being mounted on said door along said rotation axis with said handle in between.

Further characteristics and advantages will become apparent from the description of some preferred but not exclusive exemplary embodiments of an installation box according to the present disclosure, illustrated only by way of non-limitative examples with the accompanying drawings, wherein:
Figure 1 is a perspective view of an exemplary installation box according to the present disclosure in a closed position;
Figure 2 is a perspective view showing the installation box of figure 1 with the door open and the components of a mechanism for locking/unlocking the door disassembled;
Figure 3 is a perspective view illustrating an exemplary embodiment of a handle used in the installation box according to the present disclosure;
Figures 4 and 5 are two different perspective views showing an exemplary embodiment of a locking/unlocking mechanism used in the installation box according to the present disclosure;
Figure 6 is a perspective view of a component used in the mechanism illustrated in figures 4-5;
Figure 7 is a perspective view showing a second exemplary embodiment of a locking/unlocking mechanism used in an installation box according to the present disclosure;
Figure 8 is a perspective view of a component used in the mechanism illustrated in figures 7;
Figure 9 is a perspective view showing a further exemplary embodiment of a locking/unlocking mechanism used in an installation box according to the present disclosure;
Figure 10 is a perspective view of a component used in the mechanism illustrated in figures 9.

It should be noted that in the detailed description that follows, identical or similar components, either from a structural and/or functional point of view, have the same reference numerals, regardless of whether they are shown in different embodiments of the present disclosure; it should also be noted that in order to clearly and concisely describe the present disclosure, the drawings may not necessarily be to scale and certain features of the disclosure may be shown in somewhat schematic form.

Further, when the term "adapted" or "arranged" or "configured" or "shaped", is used herein while referring to any component as a whole, or to any part of a component, or to a whole combinations of components, or even to any part of a combination of components, it has to be understood that it means and encompasses correspondingly either the structure, and/or configuration and/or form and/or positioning of the related component or part thereof, or combinations of components or part thereof, such term refers to.

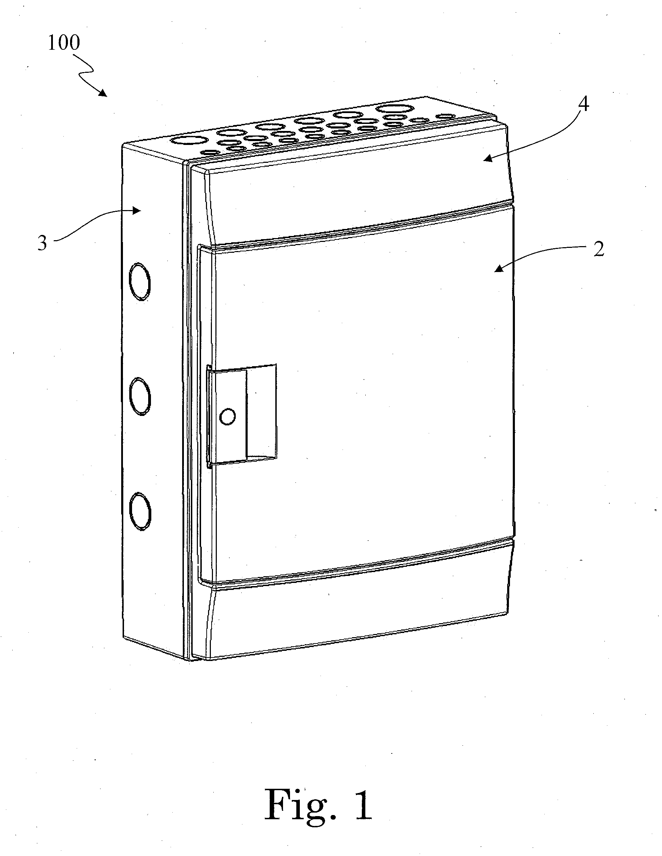

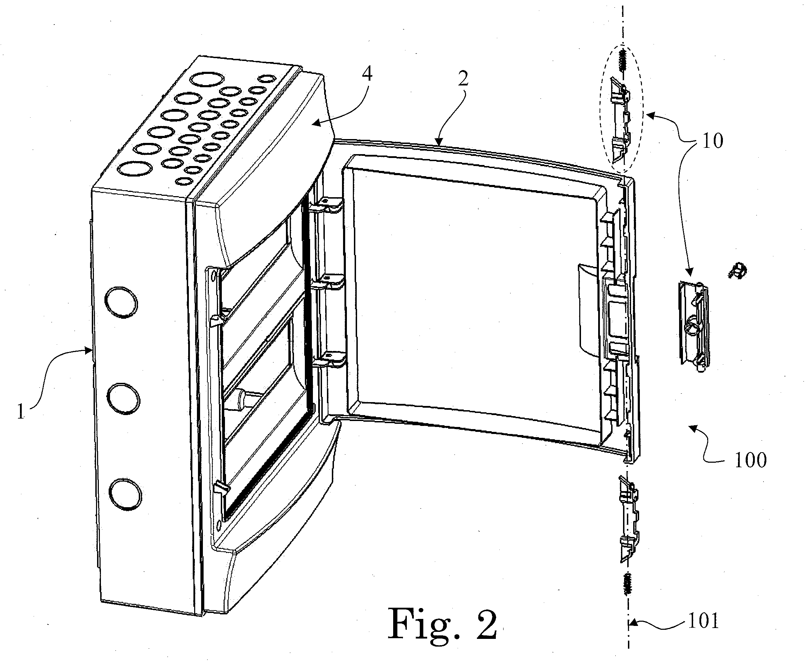

An exemplary embodiment of an installation box according to the present disclosure is represented in figures 1 and 2 and is globally indicated with the reference number 100.

The installation box 100 comprises: a housing 1 which is made of plastics and is suitable to accommodate inside it one or more electrical devices, according to solutions well known in the art and therefore not described in details herein; a door 2 connected to the housing 1, e.g. hinged on it, and also made for example of plastics; and a mechanism for opening/closing the door 2 which is indicated in the figures by the overall reference 10.

In the exemplary embodiment illustrated, the housing 1 comprises a base portion 3 and a frame-shaped cover 4 which is connected, e.g. screwed, to the base portion 3.

Clearly, the housing 1 could be differently structured, shaped or sized according to the specific needs or applications.

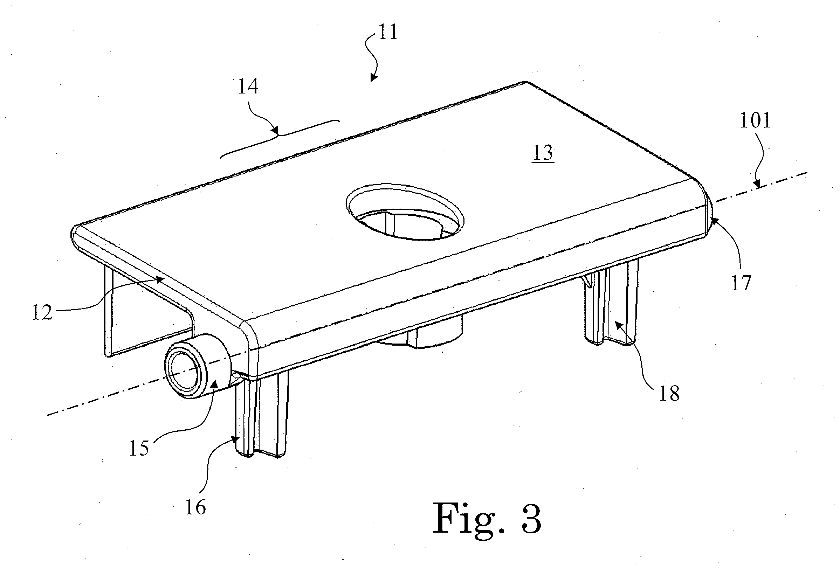

In the installation box 100 according to the present disclosure, the mechanism 10 comprises: a handle 11 which is mounted on the door 2 rotating about a rotation axis 101 with respect to the door 2 itself; and a first locking/unlocking device 20 which is operatively connected to the handle 11. Figure 3 illustrates an exemplary embodiment of a handle 11 which comprises a shaped body having a central portion 12 defining a front surface 13 and a grabbing part 14 for a user.

At least a first hollow cylinder 15 protrudes from the central portion 12 along the rotation axis 101, and a first actuation pin 16, at least partially rounded, protrudes from the central portion 12 in a direction opposite to the front surface 13 and transversal to the rotation axis 101.

In the embodiment illustrated, the handle 11 comprises: a second hollow cylinder 17 protruding from the central portion 12 along the rotation axis 101 opposite with respect to the first hollow cylinder 15; and a second actuation pin 18, at least partially rounded, which protrudes from the central portion 12 in a direction opposite to the front surface 13 and transversal to the rotation axis 101.

The term transversal hereby used encompasses a direction non-parallel to the rotation axis 101; perpendicularity has to be considered a specific case of transverse direction, and in this case the two actuation pins 16, 18 become substantially parallel to each other.

The first locking/unlocking device 20 is actuated to move by a rotation of the handle 11 so as it disengages from an associated anchoring portion 5 provided on the housing 1 and allows opening the door 2.

More in particular, when actuated by the rotation of the handle 11, the first locking/unlocking device 20 is configured to move, namely substantially translate along a direction substantially parallel to, and in particular coincident with, the rotation axis 101 of the handle 11.

Preferably, the first locking/unlocking device 20 is mounted completely on the door 2.

In the embodiments illustrated, the first locking/unlocking device 20 used in the installation box 100 according to the present disclosure comprises a first shaped body 30 suitable to operatively interact with the handle 11 and first elastic means 40 configured to contrast the movement of the first shaped body 30 when the locking device/unlocking device 20 is actuated by the rotation of the handle 11 so as to disengage from an associated anchoring portion 5 of the housing 1.

As illustrated in the attached figures, the mechanism 10 for opening/closing the door 2 preferably comprises a second locking/unlocking device 200 which is also operatively connected to and actuated by a rotation of the handle 11, substantially at the same time with the first locking device 20, so as to disengage from an associated further anchoring portion 6 on said housing 1 and allows opening the door 2 as well.

In particular, when actuated by the rotation of the handle 11, also the second locking/unlocking device 200 is configured to move, namely substantially translate along a direction substantially parallel to, and in particular coincident with, the rotation axis 101 of the handle 11.

Preferably, also the second locking/unlocking device 200 is mounted completely on the door 2.

In the embodiments illustrated, the second locking/unlocking device 20 used in the installation box 100 according to the present disclosure comprises a second shaped body 300 suitable to operatively interact with the handle 11 and second elastic means 400 configured to contrast the movement of the second shaped body 300 when the locking device/unlocking device 200 is actuated by the rotation of the handle 11 so as to disengage from the associated anchoring portion 6 of the housing 1.

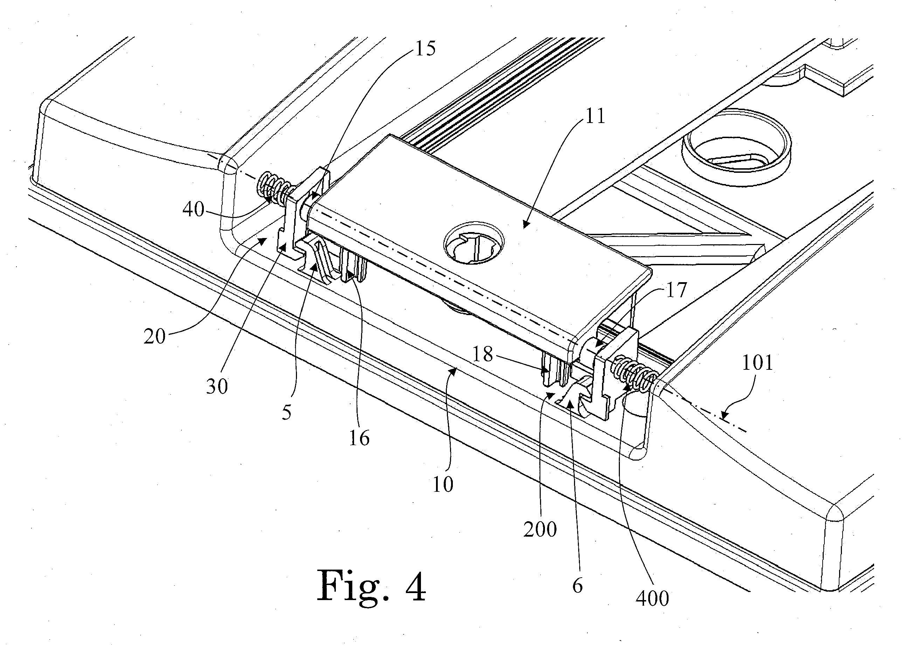

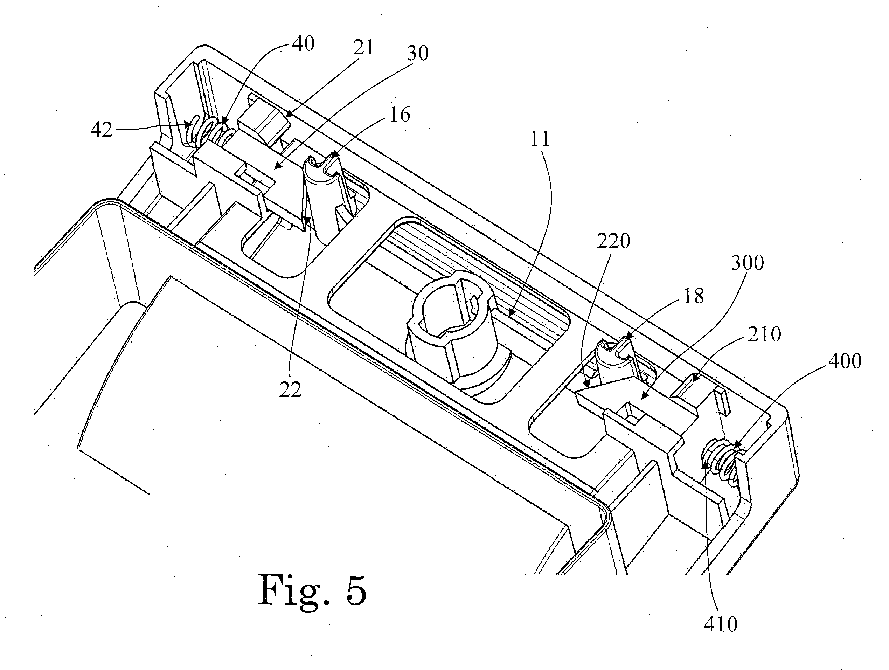

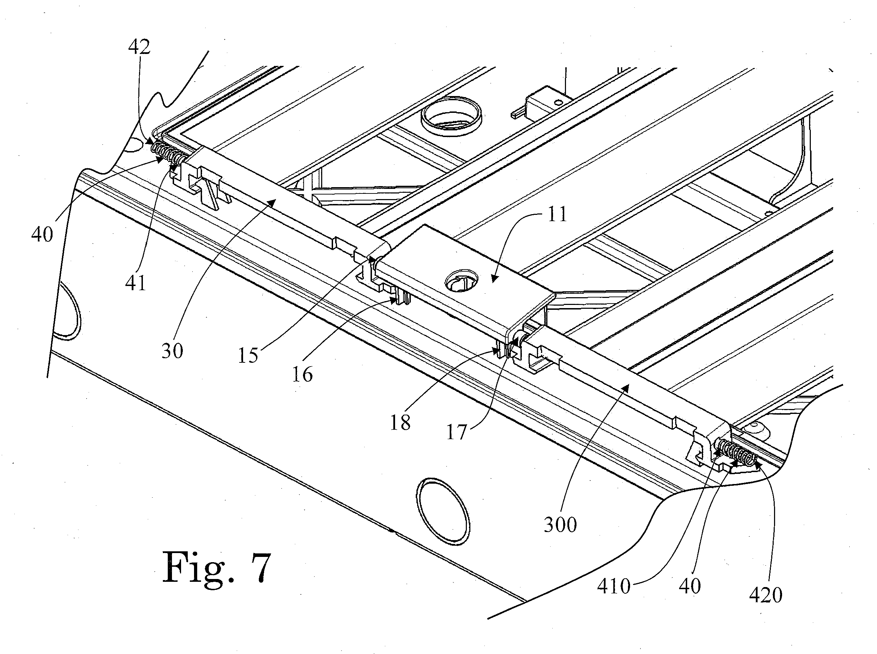

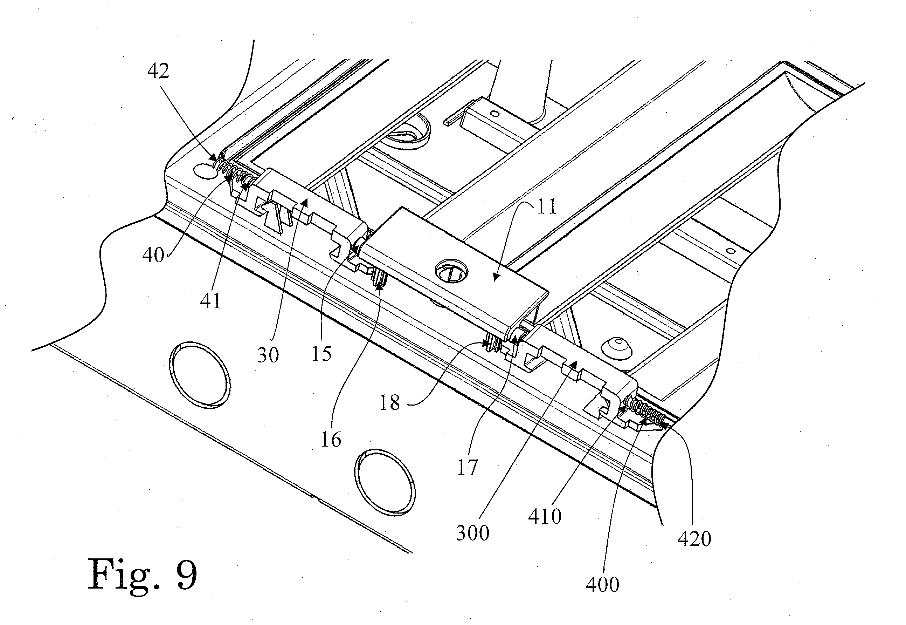

As better illustrated in figures 4-5, 7 and 9, the first and second locking/unlocking devices 20, 200 are mounted on the door 2, along the rotation axis 101, opposite to each other with the handle 11 in between.

More in particular, the first and second locking/unlocking devices 20, 200 are operatively connected to the handle 11 so as when actuated by its rotation to disengage each from the corresponding anchoring portion 5, 6, respectively, they move away from each other along the rotation axis 101.

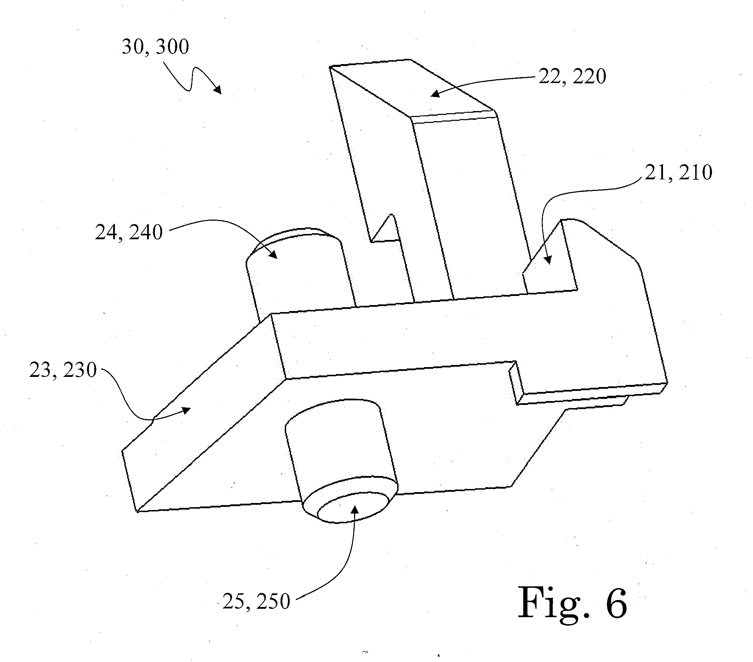

Figures 6, 8, and 10 show exemplary embodiments of the first and/or second shaped bodies 30, 300; the illustrated bodies can be used as part either of the first locking/unlocking device 20 and/or of the second locking/unlocking device 200.

In all embodiments illustrated, the first shaped body 30 and also the second shaped body 300 of the first and second locking/unlocking devices 20, 200, respectively, comprise each: at least a hook-shaped portion 21, 210 suitable to engage with/disengage from the corresponding anchoring portion 5, 6 provided on the housing 1; and an inclined surface 22, 220 on which the corresponding first and second actuating pin 16, 18 of the handle 1) abuts against preferably continuously during the rotation of the handle 11 itself.

In addition, the first shaped body and the second shaped body 30, 300 comprise each a central portion 23, 230 from which there protrude, opposite to each other and parallel to the rotation axis 101, a first coupling pin 24, 240, respectively, and a second coupling pin 25, 250, respectively.

The first coupling pin 24 of the first shaped body 30 is inserted into the corresponding first hollow cylinder 15 of the handle 11 and the second coupling pin 25 of the first shaped body 30 is suitable to interact with the associated first elastic means 40; in turn, when the second locking/unlocking mechanism 200 is used, the first coupling pin 240 of the second shaped body 300 is inserted into the corresponding second hollow cylinder 17 of the handle 11, and the second coupling pin 250 of the second shaped body 300 is suitable to interact with the associated second elastic means 400.

In the embodiments illustrated, the first and second elastic means 40, 400 comprise each a compression spring positioned along the rotation axis 101 and having one end 41, 410, respectively, mounted around the corresponding second coupling pin 25, 250 and a second end 42, 420, respectively, abutting against a wall of the door 2.

Preferably, in the installation box 100 according to the present disclosure, the first and second locking/unlocking devices 20, 200 are identical to each other, hence the first shaped body 30 and the second shaped body 300, respectively, as well as the first elastic means 40 and the second elastic means 400, respectively, are identical to each other; for this reason, the shaped bodies illustrated in the embodiments of figures 6, 8, 10 are those used for both the first shaped body 30 and the second shaped body 300.

Advantageously, according to a preferred embodiment illustrated in the relevant figures, the first and second locking/unlocking devices 20, 200 are positioned, along the rotation axis 101, symmetrically to each other with respect to said handle 11 in between.

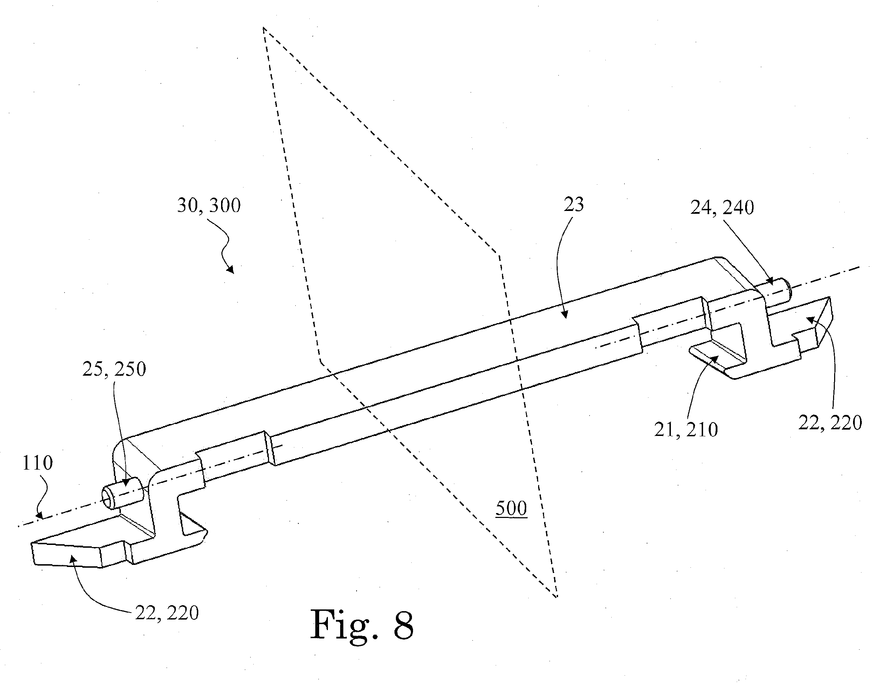

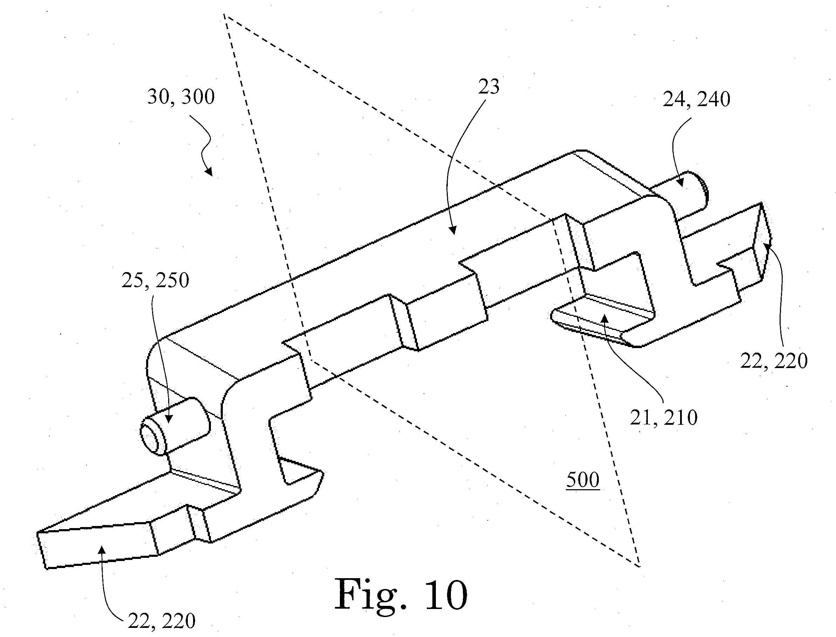

In particular, in the two embodiments illustrated in figures 8 and 10, the first and second shaped body 30, 300 of the first and second locking/unlocking devices 20, 200, respectively, are each symmetrical with respect to a plan of symmetry 500 perpendicular to the rotation axis 101. In this way, each shaped body can be mounted on one side or on the other side of the handle 11.

In practice starting from the closed position illustrated in figure 1, a user can grab the handle 11 and rotates it relative to the remaining part of the door 2 around the axis 101; when rotating the handle 11, the first actuation pin 16 abuts continuously against the inclined surface 22 of the first shaped body 30 which translates along the axis 101 and compresses the spring 40 thus allowing the hook-shaped portion 21 to disengage from the associated anchoring portion 5; when the second locking/unlocking device 200 is used, at the same time and in substantially the same way, the second actuation pin 18 of the handle 11 abuts continuously against the corresponding inclined surface 220 which translates along the axis 101 (in a direction opposite to that of the first shaped body 30) and compresses the spring 400 thus allowing the hook-shaped portion 210 to disengage from the associated anchoring portion 6.

In this way the door 2 can be opened.

When the user releases the handle 11, each shaped body 30, 300 is returned towards the initial position by the pushing action of the related spring 40, 400. Once the box has to be reclosed, it is sufficient to exert a pushing pressure on the door 2 even without rotating again the handle 11.

It has been found that the installation box 100 according to the present disclosure offers some improvements over prior art solutions; indeed, thanks to the embodiments previously described, and in particular due to the configuration and mutual position of its various elements, it is possible to use a unique type of opening/closing mechanism for the door whatever the overall size of the box would be. In fact, when the size of the installation box changes, it is necessary only to use a different length of some components, e.g. the shaped body 30, 300 and/or the spring 40, 400 while the design of the whole mechanism and of its components, as well as the operating principle, remain always the same. In addition, opening or closing of the door can be executed in a very simple and easy way.

The installation box 100 thus conceived is susceptible of modifications and variations, all of which are within the scope of the inventive concept as defined in particular by the appended claims; any possible combination of the previously disclosed embodiments/alternatives can be implemented and has to be considered within the inventive concept of the present disclosure; all the details may furthermore be replaced with technically equivalent elements. For example, it would be possible to adopt shaped bodies for the first and second locking devices 20, 200 not necessarily identical to each other. Any of the previously described components may be differently shaped, or used in a different number or parts or elements, or the components previously described can be differently connected with respect to each other, provided they are suitable for the scope they are devised for.

Also the materials used, so long as they are compatible with the specific use and purpose, as well as the dimensions, may be any according to the requirements and the state of the art.

## Claims

1. An installation box (100) for electrical distribution applications, comprising a housing (1) suitable to accommodate one or more electrical devices, a door (2) connected to said housing (1), and a mechanism (10) for opening/closing said door (2), said mechanism (10) comprising:
- a handle (11) which is mounted on said door (2) rotating about a rotation axis (101) relative to the door (2) itself; and
- a first locking/unlocking device (20) for locking/unlocking said door (2) to/from said housing (1); **characterized in that** said first locking/unlocking device (20) is mounted on said door (2) and is operatively connected to said handle (11) and is actuated by a rotation of the handle (11) itself so as it disengages from an associated first anchoring portion (5) of said housing (1) and allows opening of said door (2), wherein said first locking/unlocking device (20) is configured to translate along a direction substantially parallel with said rotation axis (101) when actuated by the rotation of said handle (11) and comprises a first shaped body (30) suitable to operatively interact with said handle (11) and first elastic means (40) configured to contrast the movement of said first shaped body (30) when the first locking device/unlocking device (20) is actuated by the rotation of said handle (11) so as to disengage from said first anchoring portion (5) of the housing (1) and **in that** said mechanism (10) comprises a second locking/unlocking device (200) which is also mounted on said door (2) and operatively connected to and actuated by a rotation of said handle (11) so as it disengages from an associated second anchoring portion (6) of said housing (1) and allows opening of said door (2), wherein said second locking/unlocking device (200) is configured to translate along a direction substantially parallel with said rotation axis (101) when actuated by the rotation of said handle (11) and comprises a second shaped body (300) suitable to operatively interact with said handle (11) and second elastic means (400) configured to contrast the movement of said second shaped body (300) when the second locking/unlocking device (200) is actuated by the rotation of said handle (11) so as to disengage from the associated second anchoring portion (6) of the housing (1), said first and second locking/unlocking devices (20, 200) being mounted on said door (2) along said rotation axis (101) with said handle (11) in between.

2. The installation box (100) according to claim 1, wherein said first and second locking/unlocking devices (20, 200) are operatively connected to said handle (11) so as when actuated by the rotation of said handle (11) to disengage from the corresponding first and second anchoring portions (5, 6), they move away from each other along said rotation axis (101).

3. The installation box (100) according to one or more of the previous claims, wherein said handle (11) comprises a shaped body having a central portion (12) defining a front surface (13) and a grabbing part (14) for a user, and at least a first hollow cylinder (15) protruding from the central portion (12) along said rotation axis (101), and a first actuation pin (16), at least partially rounded, which protrudes from said central portion (12) in a direction opposite to the front surface (13) and transversal to the rotation axis (101).

4. The installation box (100) according to claim 3, wherein said handle (11) comprises a second hollow cylinder (17) protruding from the central portion (12) along said rotation axis (101) opposite with respect to said first hollow cylinder (15), and a second actuation pin (18), at least partially rounded, which protrudes from said central portion (12) in a direction opposite to the front surface (13) and transversal to the rotation axis (101).

5. The installation box (100) according to one or more of the previous claims, wherein the first shaped body and the second shaped body of said first and second locking/unlocking devices (20, 200), respectively, comprise each at least a hook-shaped portion (21, 210) suitable to engage with/disengage from the corresponding first or second anchoring portion (5, 6) provided on said housing (1), and an inclined surface (22, 220) on which a corresponding actuating pin (16, 18) of said handle (11) abuts against during the rotation of the handle (11) itself.

6. The installation box (100) according to one or more of the previous claims wherein the first shaped body and the second shaped body of said first and second locking/unlocking devices (20, 200), respectively, comprises each a central portion (23, 230) from which there protrude, opposite to each other and parallel to the rotation axis (101), a first coupling pin (24, 240) inserted into the corresponding first or second hollow cylinder (15, 17), and a second coupling pin (25, 250) suitable to interact with the associated first or second elastic means (40, 400).

7. The installation box (100) according to one or more of the previous claims, wherein said first and second elastic means (40, 400) comprise each a compression spring (40) positioned along said rotation axis (101) and having one end (31) mounted around the corresponding second coupling pin (25, 250) and a second end abutting against a wall of said door (2).

8. The installation box (100) according to one or more of the previous claims, wherein said first and second locking/unlocking devices (20, 200) are identical to each other.

9. The installation box (100) according to claim 8, wherein said first and second locking/unlocking devices (20, 200) are positioned, along said rotation axis (101), symmetrically to each other with respect to said handle (11).

10. The installation box (100) according to one or more of the previous claims, wherein said first and second shaped body of the first and second locking/unlocking devices (20, 200), respectively, are each symmetrical with respect to a plan of symmetry (500) perpendicular to the rotation axis (101).

## Patentansprüche

1. Installationskasten (100) für Elektrikverteilungsanwendungen, umfassend ein Gehäuse (1), das geeignet ist, eine oder mehrere elektrische Vorrichtungen aufzunehmen, eine mit dem Gehäuse (1) verbundene Tür (2) und einen Mechanismus (10) zum Öffnen/Schließen der Tür (2), wobei der Mechanismus (10) umfasst:
- einen Griff (11), der an der Tür (2) montiert ist und sich um eine Drehachse (101) in Bezug auf die Tür (2) selbst dreht; und
- eine erste Ver-/Entriegelungsvorrichtung (20) zum Ver-/Entriegeln der Tür (2) mit dem Gehäuse (1); **dadurch gekennzeichnet, dass** die erste Ver-/Entriegelungsvorrichtung (20) an der Tür (2) montiert ist und funktionsfähig mit dem Griff (11) verbunden ist und durch eine Drehung des Griffs (11) selbst betätigt wird, so dass sie sich von einem zugeordneten ersten Verankerungsabschnitt (5) des Gehäuses (1) löst und das Öffnen der Tür (2) ermöglicht, wobei die erste Ver-/Entriegelungsvorrichtung (20) konfiguriert ist, um sich entlang einer Richtung im Wesentlichen parallel zu der Drehachse (101) zu verschieben, wenn sie durch die Drehung des Griffs (11) betätigt wird, und einen ersten Formkörper (30) umfasst, der geeignet ist, um mit dem Griff (11) funktionsfähig zu interagieren, und ein erstes elastisches Mittel (40) umfasst, das konfiguriert ist, um die Bewegung des ersten Formkörpers (30) zu kontrastieren, wenn die erste Ver-/Entriegelungsvorrichtung (20) durch die Drehung des Griffs (11) betätigt wird, um sich von dem ersten Verankerungsabschnitt (5) des Gehäuses (1) zu lösen, und dadurch, dass der Mechanismus (10) eine zweite Ver-/Entriegelungsvorrichtung (200) umfasst, die ebenfalls an der Tür (2) montiert ist und funktionsfähig mit dem Griff (11) verbunden und durch eine Drehung des Griffs betätigt wird, so dass sie sich von einem zugehörigen zweiten Verankerungsabschnitt (6) des Gehäuses (1) löst und das Öffnen der Tür (2) ermöglicht, wobei die zweite Ver-/Entriegelungsvorrichtung (200) konfiguriert ist, um sich entlang einer Richtung im Wesentlichen parallel zu der Drehachse (101) zu verschieben, wenn sie durch die Drehung des Griffs (11) betätigt wird, und einen zweiten Formkörper (300) umfasst, der geeignet ist, um mit dem Griff (11) funktionsfähig zu interagieren, und ein zweites elastisches Mittel (400) umfasst, das konfiguriert ist, um die Bewegung des zweiten Formkörpers (300) zu kontrastieren, wenn die zweite Ver-/Entriegelungsvorrichtung (200) durch die Drehung des Griffs (11) betätigt wird, um sich von dem zugehörigen zweiten Verankerungsabschnitt (6) des Gehäuses (1) zu lösen,
wobei die erste und zweite Ver-/Entriegelungsvorrichtung (20, 200) an der Tür (2) entlang der Drehachse (101) mit dem Griff (11) dazwischen montiert sind.

2. Installationskasten (100) nach Anspruch 1, wobei die erste und zweite Ver-/Entriegelungsvorrichtung (20, 200) funktionsfähig mit dem Griff (11) verbunden sind, so dass sie sich, wenn sie durch die Drehung des Griffs (11) betätigt werden, um sich von den entsprechenden ersten und zweiten Verankerungsabschnitten (5, 6) zu lösen, entlang der Drehachse (101) voneinander entfernen.

3. Installationskasten (100) nach einem oder mehreren der vorstehenden Ansprüche, wobei der Griff (11) einen Formkörper mit einem Mittelabschnitt (12), der eine Vorderfläche (13) und ein Greifteil (14) für einen Benutzer definiert, und mindestens einem ersten Hohlzylinder (15), der aus dem Mittelabschnitt (12) entlang der Drehachse (101) herausragt, und einem ersten, mindestens teilweise abgerundeten Betätigungsbolzen (16) umfasst, der aus dem Mittelabschnitt (12) in eine Richtung entgegengesetzt zur Vorderfläche (13) und quer zur Drehachse (101) herausragt.

4. Installationskasten (100) nach Anspruch 3, wobei der Griff (11) einen zweiten Hohlzylinder (17), der aus dem Mittelabschnitt (12) entlang der Drehachse (101) gegenüber dem ersten Hohlzylinder (15) herausragt, und einen zweiten, zumindest teilweise abgerundeten Betätigungsbolzen (18) umfasst, der aus dem Mittelabschnitt (12) in eine Richtung gegenüber der Vorderfläche (13) und quer zur Drehachse (101) herausragt.

5. Installationskasten (100) nach einem oder mehreren der vorstehenden Ansprüche, wobei der erste Formkörper und der zweite Formkörper der ersten und zweiten Ver-/Entriegelungsvorrichtung (20, 200) jeweils mindestens einen hakenförmigen Abschnitt (21, 210) umfassen, der geeignet ist, um mit dem entsprechenden ersten oder zweiten Verankerungsabschnitt (5, 6), der an dem Gehäuse (1) vorgesehen ist, in Eingriff zu treten/sich von diesem zu lösen, und eine geneigte Oberfläche (22, 220) umfassen, auf der ein entsprechender Betätigungsbolzen (16, 18) des Griffs (11) während der Drehung des Griffs (11) selbst anliegt.

6. Installationskasten (100) nach einem oder mehreren der vorstehenden Ansprüche, wobei der erste Formkörper und der zweite Formkörper der ersten und zweiten Ver-/Entriegelungsvorrichtung (20, 200) jeweils einen zentralen Abschnitt (23, 230) umfassen, aus dem gegenüberliegend und parallel zur Drehachse (101) ein erster Kupplungsstift (24, 240), der in den entsprechenden ersten oder zweiten Hohlzylinder (15, 17) eingesetzt ist, und ein zweiter Kupplungsstift (25, 250) vorstehen, der geeignet ist, um mit dem zugeordneten ersten oder zweiten elastischen Mittel (40, 400) zusammenzuwirken.

7. Installationskasten (100) nach einem oder mehreren der vorstehenden Ansprüche, wobei das erste und zweite elastische Mittel (40, 400) jeweils eine Druckfeder (40) umfasst, die entlang der Drehachse (101) angeordnet ist und ein Ende (31) hat, das um den entsprechenden zweiten Kupplungsstift (25, 250) herum montiert ist, und ein zweites Ende hat, das an einer Wand der Tür (2) anliegt.

8. Installationskasten (100) nach einem oder mehreren der vorstehenden Ansprüche, wobei die erste und zweite Ver-/Entriegelungsvorrichtung (20, 200) identisch sind.

9. Installationskasten (100) nach Anspruch 8, wobei die erste und zweite Ver-/Entriegelungsvorrichtung (20, 200) entlang der Drehachse (101) symmetrisch zueinander in Bezug auf den Griff (11) angeordnet sind.

10. Installationskasten (100) nach einem oder mehreren der vorstehenden Ansprüche, wobei der erste und zweite Formkörper der ersten und zweiten Ver-/Entriegelungsvorrichtung (20, 200) jeweils symmetrisch in Bezug auf einen Symmetrieplan (500) senkrecht zur Drehachse (101) sind.

## Revendications

1. Coffret d'installation (100) pour des applications de distribution électrique, comprenant un boîtier (1) adapté pour accueillir un ou plusieurs dispositifs électriques, une porte (2) reliée audit boîtier (1), et un mécanisme (10) d'ouverture/fermeture de ladite porte (2), ledit mécanisme (10) comprenant :
- une poignée (11) qui est montée sur ladite porte (2) tournant autour d'un axe de rotation (101) par rapport à la porte (2) elle-même ; et
- un premier dispositif de verrouillage/déverrouillage (20) pour verrouiller/déverrouiller ladite porte (2) audit/dudit boîtier (1) ; **caractérisé en ce que** ledit premier dispositif de verrouillage/déverrouillage (20) est monté sur ladite porte (2) et est relié de manière fonctionnelle à ladite poignée (11) et est actionné par une rotation de la poignée (11) elle-même de manière à ce qu'il se désengage d'une première partie d'ancrage associée (5) dudit boîtier (1) et permette une ouverture de ladite porte (2), dans lequel ledit premier dispositif de verrouillage/déverrouillage (20) est configuré pour se déplacer en translation le long d'une direction sensiblement parallèle audit axe de rotation (101) lorsqu'actionné par la rotation de ladite poignée (11) et comprend un premier corps de forme (30) adapté pour interagir de manière fonctionnelle avec ladite poignée (11) et des premiers moyens élastiques (40) configurés pour contraster le mouvement dudit premier corps de forme (30) lorsque le premier dispositif de verrouillage/dispositif de déverrouillage (20) est actionné par la rotation de ladite poignée (11) de manière à se désengager de ladite première partie d'ancrage (5) du boîtier (1) et **en ce que** ledit mécanisme (10) comprend un second dispositif de verrouillage/déverrouillage (200) qui est également monté sur ladite porte (2) et relié de manière fonctionnelle à et actionné par une rotation de ladite poignée (11) de manière à ce qu'il se désengage d'une seconde partie d'ancrage associée (6) dudit boîtier (1) et permette une ouverture de ladite porte (2), dans lequel ledit second dispositif de verrouillage/déverrouillage (200) est configuré pour se déplacer en translation le long d'une direction sensiblement parallèle audit axe de rotation (101) lorsqu'actionné par la rotation de ladite poignée (11) et comprend un second corps de forme (300) adapté pour interagir de manière fonctionnelle avec ladite poignée (11) et des seconds moyens élastiques (400) configurés pour contraster le mouvement dudit second corps de forme (300) lorsque le second dispositif de verrouillage/déverrouillage (200) est actionné par la rotation de ladite poignée (11) de manière à se désengager de la seconde partie d'ancrage associée (6) du boîtier (1), lesdits premier et second dispositifs de verrouillage/déverrouillage (20, 200) étant montés sur ladite porte (2) le long dudit axe de rotation (101) avec ladite poignée (11) entre.

2. Coffret d'installation (100) selon la revendication 1, dans lequel lesdits premier et second dispositifs de verrouillage/déverrouillage (20, 200) sont reliés de manière fonctionnelle à ladite poignée (11) de manière à ce que lorsqu'actionnés par la rotation de ladite poignée (11) pour se désengager des première et seconde parties d'ancrage correspondantes (5, 6), ils s'éloignent l'un de l'autre le long dudit axe de rotation (101).

3. Coffret d'installation (100) selon une ou plusieurs des revendications précédentes, dans lequel ladite poignée (11) comprend un corps de forme ayant une partie centrale (12) définissant une surface avant (13) et une partie de saisie (14) pour un utilisateur, et au moins un premier cylindre creux (15) faisant saillie depuis la partie centrale (12) le long dudit axe de rotation (101), et une première broche d'actionnement (16), au moins partiellement arrondie, qui fait saillie depuis ladite partie centrale (12) dans une direction opposée à la surface avant (13) et transversale à l'axe de rotation (101).

4. Coffret d'installation (100) selon la revendication 3, dans lequel ladite poignée (11) comprend un second cylindre creux (17) faisant saillie depuis la partie centrale (12) le long dudit axe de rotation (101) à l'opposé par rapport audit premier cylindre creux (15), et une seconde broche d'actionnement (18), au moins partiellement arrondie, qui fait saillie depuis ladite partie centrale (12) dans une direction opposée à la surface avant (13) et transversale à l'axe de rotation (101).

5. Coffret d'installation (100) selon une ou plusieurs des revendications précédentes, dans lequel le premier corps de forme et le second corps de forme desdits premier et second dispositifs de verrouillage/déverrouillage (20, 200), respectivement, comprennent chacun au moins une partie en forme de crochet (21, 210) adaptée pour s'engager avec/se désengager de la première ou seconde partie d'ancrage correspondante (5, 6) prévue sur ledit boîtier (1), et une surface inclinée (22, 220) contre laquelle bute une broche d'actionnement correspondante (16, 18) de ladite poignée (11) pendant la rotation de la poignée (11) elle-même.

6. Coffret d'installation (100) selon une ou plusieurs des revendications précédentes dans lequel le premier corps de forme et le second corps de forme desdits premier et second dispositifs de verrouillage/déverrouillage (20, 200), respectivement, comprennent chacun une partie centrale (23, 230) de laquelle font saillie, opposés l'un à l'autre et parallèles à l'axe de rotation (101), une première broche de couplage (24, 240) insérée dans le premier ou second cylindre creux correspondant (15, 17), et une seconde broche de couplage (25, 250) adaptée pour interagir avec les premiers ou seconds moyens élastiques associés (40, 400).

7. Coffret d'installation (100) selon une ou plusieurs des revendications précédentes, dans lequel lesdits premiers et seconds moyens élastiques (40, 400) comprennent chacun un ressort de compression (40) positionné le long dudit axe de rotation (101) et ayant une extrémité (31) montée autour de la seconde broche de couplage correspondante (25, 250) et une seconde extrémité butant contre une paroi de ladite porte (2).

8. Coffret d'installation (100) selon une ou plusieurs des revendications précédentes, dans lequel lesdits premier et second dispositifs de verrouillage/déverrouillage (20, 200) sont identiques l'un à l'autre.

9. Coffret d'installation (100) selon la revendication 8, dans lequel lesdits premier et second dispositifs de verrouillage/déverrouillage (20, 200) sont positionnés, le long dudit axe de rotation (101), symétriquement l'un de l'autre par rapport à ladite poignée (11).

10. Coffret d'installation (100) selon une ou plusieurs des revendications précédentes, dans lequel ledit premier et second corps de forme des premier et second dispositifs de verrouillage/déverrouillage (20, 200), respectivement, sont chacun symétriques par rapport à un plan de symétrie (500) perpendiculaire à l'axe de rotation (101).
